# EUROPÄISCHE PATENTSCHRIFT

(11) **EP 3 135 567 B1**
(45) Veröffentlichungstag und Bekanntmachung des Hinweises auf die Patenterteilung: **06.11.2019**
(21) Anmeldenummer: 16001841.2
(22) Anmeldetag: 23.08.2016
(51) Int. Cl.: B62D 33/06, A47C 17/80

(54) **FAHRZEUG, INSBESONDERE NUTZFAHRZEUG MIT EINER SCHLAFLIEGE MIT EINEM LIEGEMODUL**
VEHICLE, IN PARTICULAR A COMMERCIAL VEHICLE WITH A BUNK WITH A COUCH MODULE
VÉHICULE AUTOMOBILE, EN PARTICULIER VÉHICULE UTILITAIRE COMPRENANT UN COUCHAGE DOTÉ D'UN MODULE DE COUCHAGE

(30) Priorität: 26.08.2015 DE 102015011191
(43) Veröffentlichungstag der Anmeldung: 01.03.2017
(73) Patentinhaber: MAN Truck & Bus SE, 80995 München (DE)
(72) Erfinder: Siflinger, Markus, 85604 Zorneding (DE); Gündogdu, Oguzhan, 85221 Dachau (DE)
(74) Vertreter: Liebl, Thomas

(56) Entgegenhaltungen:
- DE-U1- 8 913 590
- US-A1- 2001 044 959
- US-A1- 2013 097 782
- US-B1- 6 718 574

## Beschreibung

Die Erfindung betrifft ein Fahrzeug, insbesondere ein Nutzfahrzeug, mit einer Schlafliege mit einem Liegemodul.

Ein Nutzfahrzeug mit einer Schlafliege, insbesondere ein Fahrerhaus eines Lastkraftwagens mit einer Schlafliege, die jeweils direkt oder indirekt eine feste Verbindung mit dem Fahrzeugaufbau hat ist allgemein bekannt. Nachteilig hat jedoch bei einer Schräglage des Fahrerhauses im Ruhezustand (Parkposition) damit auch die Schlafliege mit ihrem Liegemodul eine entsprechende Schräglage. Eine ergonomisch optimale Schlafposition für einen Fahrer oder Beifahrer ist dadurch nicht mehr gegeben. Zudem ist eine Schlafliege in einem Fahrerhaus allgemein bekannt, die um eine Achse schwenkbar gelagert ist. Auch damit ist eine optimale Liegeposition nur unzureichend realisierbar.

Dokument US 6 718 574 B1 offenbart ein Fahrzeug mit einer Schlafliege mit einem Liegemodul, das mit einer Haltevorrichtung mit dem Fahrzeugaufbau verbunden ist, wobei die Haltevorrichtung eine Nivelliervorrichtung aufweist, mittels der das Liegemodul der Schlafliege nivellierbar ist, wobei für eine Nivellierung des Liegemoduls bezüglich einer Schräglage des Fahrzeugaufbaus in einer Fahrzeug-Ruheposition die Haltevorrichtung aus mehreren höhenverstellbaren Luftzylindern ausgebildet ist, die voneinander in Quer- und Längsrichtung des Liegemoduls beabstandet und/oder versetzt sind, wobei die Hubelemente für eine Höheneinstellung und Nivellierung unabhängig steuerbar sind.

Aufgabe der Erfindung ist es, ein Fahrzeug, insbesondere ein Nutzfahrzeug, mit einer Schlafliege so weiterzubilden, dass bei allen im Ruhezustand (Parkposition) möglichen Schräglagen des Fahrzeugs, bzw. eines Fahrerhauses, eine bestmögliche Schlafposition für einen Fahrer/Beifahrer herstellbar ist.

Diese Aufgabe wird gelöst mit den Merkmalen des Anspruchs 1. Vorteilhafte Ausgestaltungen sind Gegenstand der darauf rückbezogenen Unteransprüche.

Gemäß Anspruch 1 ist ein Fahrzeug, insbesondere ein Nutzfahrzeug, mit einer Schlafliege mit einem Liegemodul vorgesehen, das mit einer Haltevorrichtung mit dem Fahrzeugaufbau verbunden ist, wobei die Haltevorrichtung eine Nivelliervorrichtung ausbildet oder aufweist, mittels der das Liegemodul der Schlafliege nivellierbar ist und/oder in eine waagrechte Position bezüglich einer Schräglage des Fahrzeugaufbaus gebracht werden kann. Damit kann auch bei Fahrzeug-Schräglagen eine waagrechte Schlafposition eingestellt werden.

Erfindungsgemäß ist die Haltevorrichtung für das Liegemodul, für eine Nivellierung des Liegemoduls bezüglich einer Schräglage des Fahrzeugaufbaus in einer Fahrzeug-Ruheposition, aus wenigstens einem Kugelgelenk und aus mehreren, vorzugsweise wenigstens drei, höhenverstellbaren Hubelementen ausgebildet ist, die derart voneinander in Quer- und in Längsrichtung des Liegemoduls beabstandet und/oder versetzt sind, dass das Liegemodul um eine Längs- und/oder Querachse verschwenkbar ist. Diese mehreren, vorzugsweise wenigstens drei, Hubelemente dürfen für einen Ausgleich bezüglich einer Schräglage des Fahrzeugs um eine Längs- und/oder Querachse ersichtlich nicht in einer Längsrichtung angeordnet sein. Bei einer Anordnung in zum Beispiel einer Dreieckform zwischen Liegemodul und Fahrzeugaufbau kann die Fläche des damit aufgespannten Dreiecks und damit das Liegemodul so um eine Längsachse und/oder Querachse gekippt werden, dass bezüglich des Fahrzeugaufbaus eine Nivellierung zu einer waagrechten Position möglich ist. Dabei kann das Liegemodul auf einem um eine Längsachse und/oder Querachse schwenkbaren und arretierbaren Kugelgelenk angeordnet sein. Durch die angegebene Stelleinrichtungen ist es möglich, eine optimale Schlafposition für einen Fahrer/Beifahrer einzustellen.

In einer bevorzugten Ausführungsform weist das Liegemodul eine flache und/oder rechteckige Form auf, wobei bevorzugt vorgesehen ist, dass je ein Hubelement einer der vier Rechteckseiten zugeordnet ist, vorzugsweise jeweils in einem mittleren Bereich jeder der vier Rechteckseiten angeordnet ist. Bei einem derartigen Aufbau werden somit im Wesentlichen vier Hubelemente verwendet, die jeweils einzeln in zum Beispiel einem mittleren Bereich jeder der vier Rechteckseiten angeordnet sind. Damit ist eine besonders einfache Einstellung und Nivellierung des Liegemoduls möglich. Das Liegemodul soll dabei vorzugsweise aus einem Basisrahmen und/oder aus einer Basisplatte gegebenenfalls mit umlaufendem Rand und mit einem darauf liegenden oder einliegenden Lattenrost und einer Matratze aufgebaut sein.

Die Hubelemente sind für eine Höheneinstellung und Nivellierung erfindungsgemäß unabhängig voneinander steuerbar. Als Hubelemente können grundsätzlich viele an sich bekannten Bauelemente, wie Teleskopstützen, Scherenelemente, etc. verwendet werden. Erfindungsgemäß werden aber Hubelemente als Aktuatoren in der Art unabhängig steuerbarer Bälge oder Kissen eingesetzt, da diese bei sicherer Funktion kostengünstig und gewichtsgünstig eingesetzt werden können.

Besonders bevorzugt kann kostengünstig und funktionssicher ein steuerbares Mehrkammer-Luftbalgsystem verwendet werden, welches mit Druckluft als Arbeitsmedium aus einem Fahrzeug-Bordnetz betrieben werden kann. Auch der Einsatz einer separaten, gegebenenfalls im Liegemodul voll- oder teilintegrierten, Kompressoreinheit ist je nach den Gegebenheiten möglich.

Alternativ kann auch ein steuerbares Mehrkammer-Hydraulikbalgsystem verwendet werden, das mit einem flüssigen Arbeitsmedium, beispielsweise Öl oder Wasser als Arbeitsmedium, betrieben wird und/oder ein Druckausgleichselement und/oder eine, vorzugsweise voll- oder teilweise in das Liegemodul integrierte, Kompressoreinheit aufweist.

Je nach den Gegebenheiten können selbstverständlich auch Systeme mit Kombinationen von Arbeitsmedien, wie Luft/Öl, Luft/Wasser, etc. betrieben werden.

Bei einer besonders komfortablen Nivellierungseinrichtung werden gegebenenfalls eine Fahrzeugruheposition und eine Fahrzeugneigung bzw. Schräglage durch eine Sensorik festgestellt. Insbesondere für diesen Fall (aber nicht ausschließlich für diesen Fall) können die Hubelemente zur Nivellierung bei festgestellter Fahrzeug-Ruheposition und Fahrzeug-Neigung mittels einer Regel-/Steuer-Elektrik/Elektronik selbsttätig betätigbar bzw. aktivierbar sein. Alternativ oder zusätzlich soll auch individuell eine Bedienperson, vorzugsweise ein Fahrer oder Beifahrer, das Liegemodul in eine waagrechte Position oder gegebenenfalls individuell nach eigenen Bedürfnissen mittels einer Bedieneinheit über die Regel-/Steuer-Elektrik/Elektronik einstellen können.

Grundsätzlich können dazu unterschiedliche, allgemein bekannte Bedieneinheiten verwendet werden. Insbesondere kann die Bedieneinheit zur Aktivierung und/oder Deaktivierung der Regel-/Steuer-Elektrik oder -Elektronik wenigstens einen Schalter und/oder wenigstens einen Taster und/oder wenigstens ein Fernbedienungselement und/oder eine App für eine Aktivierung/Steuerung mittels einer Steuereinrichtung, vorzugsweise einer mobilen Datenverarbeitungseinrichtung (Tablet-PC, Mobiltelefon, etc.) und/oder einem Fahrzeugschlüssel oder ähnliches als Steuereinrichtung, aufweisen. Die Ansteuerung kann dabei kabelgebunden oder kabellos erfolgen.

Alternativ kann sich das Liegemodul auch durch sein Eigengewicht selbst nivellieren, indem das Liegemodul über ein mittels kommunizierender Leitungen verbundenes Balg- oder Kissensystem, das vorzugsweise Hubelemente der Haltevorrichtung ausbildet, abgestützt ist, wobei bevorzugt vorgesehen ist, dass als Arbeitsmedium eine Flüssigkeit, insbesondere Wasser oder Öl, verwendet wird. Ähnlich wie in einer an sich bekannten Schlauchwaage verteilt sich dann das Arbeitsmedium im Balg- oder Kissensystem, so dass durch ein Überlaufen vom höheren Balg in einen tieferliegenden Balg, der anfänglich höher ausgefahrene Balg in seiner Höhe soweit reduziert und der tiefere soweit angehoben wird, dass das Liegemodul waagrecht liegt.

In einer weiteren Ausführungsform weist das Liegemodul eine Basisplatte und/oder einen Basisrahmen auf, wobei ein Kugelgelenk zentral unter der Basisplatte angeordnet und mit dieser verbunden ist, wobei eine Winkelverstellung des Kugelgelenks durchführbar ist. Durch eine Winkelverstellung des Kugelgelenks, beispielsweise mittels eines Seilzugs und/oder eines Aktuators, kann auch damit das Liegemodul längs und quer für eine Nivellierung in die waagrechte Position verstellt werden. Zweckmäßig wird eine eingestellte Winkellage fixiert, vorzugsweise mittels einer Fixiereinrichtung, wie beispielsweise einer Magnetsicherung, fixiert.

Konkret wird das Liegemodul zweckmäßig mit wenigstens einer Abstützung und/oder Führung am Aufbau gehalten und arbeitet während einer Verstellung gegen eine mechanische Kraft. Das Liegemodul soll sowohl in einer Grundstellung auf festen Auflagen als auch in einer nivellierten Einstellung mittels der Kinematik und/oder Verriegelungsbauteilen insbesondere klapperfrei gesichert werden können.

In einer weiteren Ausgestaltung kann das Liegemodul mittels einer Kinematik, zum Beispiel in Form von Scharnieren, klappbar ausgebildet werden. Dies zum Beispiel insbesondere um einen Zugang zu einem oder mehreren Stauräumen zu erhalten.

Die erfindungsgemäße Einrichtung ist besonders für einen Lastkraftwagen mit einem Fahrerhaus geeignet, in dem eine Schlafliege, vorzugsweise quer im Bereich hinter den Sitzen, angeordnet ist.

Anhand einer Zeichnung wird die Erfindung weiter erläutert.

Es zeigen:
- Fig. 1: eine Zugmaschine mit einem Fahrerhaus in seitlicher Schräglage,
- Fig. 2: eine Zugmaschine mit Fahrerhaus in Längsschräglage,
- Fig. 3: eine perspektivische Darstellung eines Liegemoduls einer Schlafliege,
- Fig. 4: einzelne Bestandteile des Liegemoduls nach Fig. 3 in einer Explosionsdarstellung,
- Fig. 5: eine Ansicht von unten auf das Liegemodul nach Fig.3,
- Fig. 6: eine Seitenansicht des Liegemoduls nach Fig. 5, und
- Fig. 7: schematisch ein verstellbares Kugelgelenk mit Magnetsicherung.

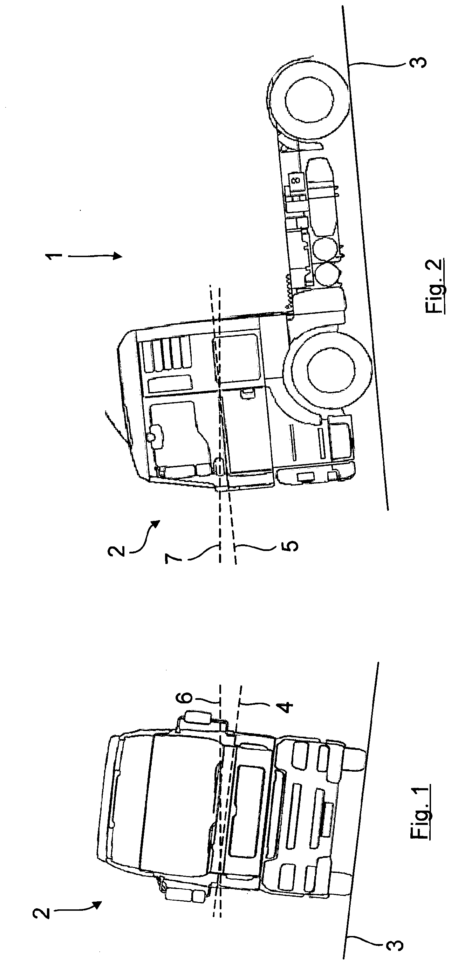

In den Fig. 1 und 2 ist ein Nutzfahrzeug 1 als Zugmaschine eines Sattelzugs mit einem Fahrerhaus 2 in einer Ruheposition (Parkposition) dargestellt, bei der es auf einer Schrägfläche 3 abgestellt ist. Wie aus den Fig. 1 und 2 ersichtlich, ist die Schrägfläche 3 bezüglich des Fahrerhauses 2 seitlich und nach vorne geneigt. Eine im Fahrerhaus 2 angeordnete Schlafliege wäre bei einem festen Einbau entsprechend den Ist-Linien 4, 5 ebenfalls schräg geneigt. Für eine optimale Liegeposition soll ein Liegemodul 8 entsprechend der Linien 6, 7 durch eine Nivellierung etwa waagrecht einstellbar sein, wie dies im Folgendem erläutert ist:

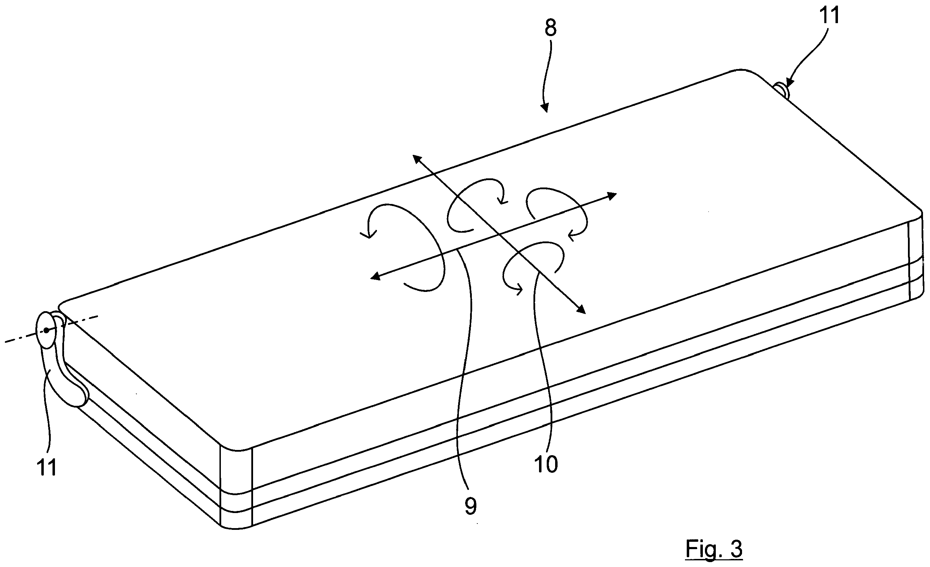

In Fig. 3 ist perspektivisch ein Liegemodul 8 einer Schlafliege dargestellt, die im Fahrerhaus 2 angeordnet ist. Das Liegemodul 8 ist für eine Nivellierung oder individuelle Einstellung in eine optimale Liegeposition um ihre Längsachse bzw. -richtung 9 und Querachse bzw. - richtung 10 in beide Richtungen verschwenkbar, womit die Längs- und Querstellungen des Fahrerhauses 2 ausgeglichen werden können.

An einer Längsseite des Liegemoduls 8 ist lediglich beispielhaft und schematisch jeweils endseitig ein Schwenkhebel 11 als Kinematik zum Aufklappen des Liegemoduls 8, insbesondere für einen Zugang zu einem Stauraum, angeordnet.

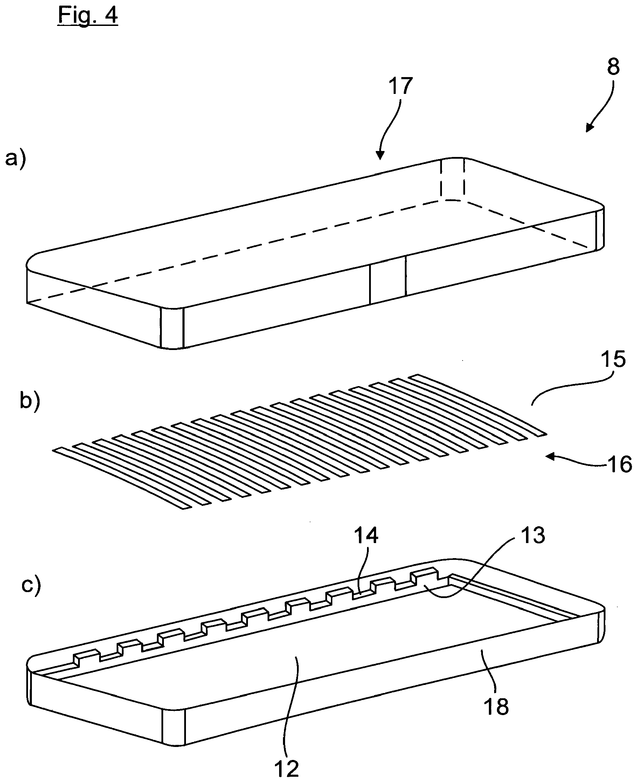

In Fig. 4 ist der Aufbau des Liegemoduls 8 in einer Explosionsdarstellung im einzelnen gezeigt: Fig. 4c zeigt eine rechteckige Basisplatte 12 mit einem umlaufenden Basisrahmen 13, der an der Längsseite Ausnehmungen 14 zur Aufnahme von Latten 15 aufweist, wodurch ein Lattenrost 16 gebildet wird. Auf dem Lattenrost liege eine Matratze 17, die durch den nach oben abstehenden Rand 18 an der Basisplatte 12 in ihrer Position rutschsicher gehalten wird.

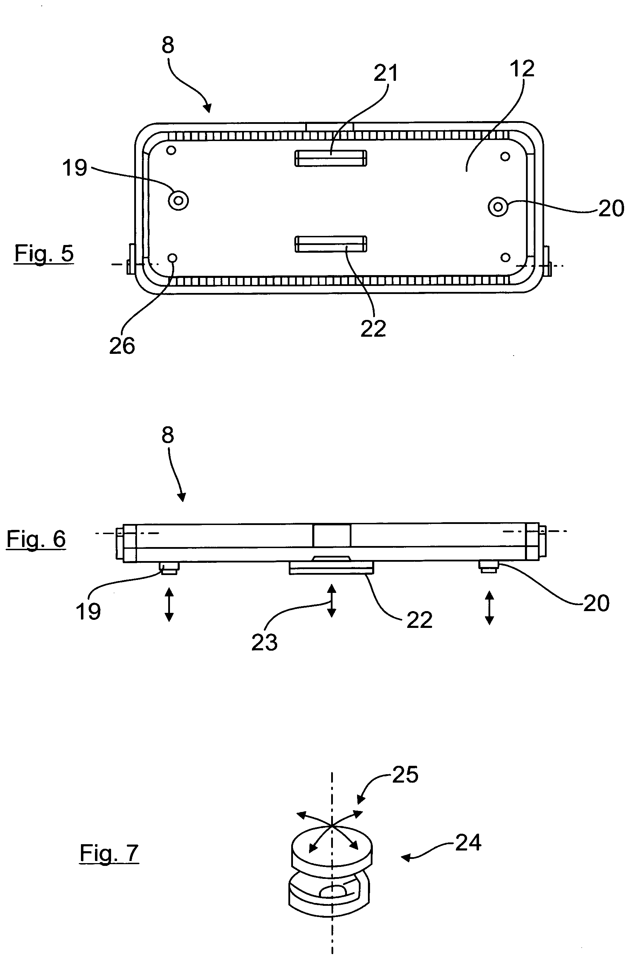

In Fig. 5 ist eine Ansicht von unten und in Fig. 6 eine Ansicht von der Seite auf das Liegemodul 8 gezeigt. Im hier beispielhaft mittleren Bereich jeder der vier Rechteckseiten der Basisplatte 12 sind etwas nach innen versetzt Hubelemente als Luftbälge 19, 20, 21, 22 in einem steuerbaren Mehrkammer-Luftbalgsystem angebracht. Die an den Schmalseiten liegenden Luftbälge 19, 20 sind mit relativ kleinem Durchmesser zylindrisch ausgebildet, während die an den Längsseiten angeordneten Luftbälge 21, 22 eine Längserstreckung aufweisen.

Wie dies mit den Doppelpfeilen 23 in Fig. 6 angedeutet ist, können die Luftbälge 19 bis 22 vorzugsweise mit Druckluft aus dem Bordnetz betrieben und so unabhängig voneinander angesteuert werden, dass sie als Hubelemente bezüglich ihrer (nicht dargestellten) Auflage und damit bezüglich des Fahrerhauses das Liegemodul 8 um die Längs- und/oder eine Querachse schwenken können. Eine Fahrzeugruheposition in Verbindung mit einer Fahrzeugneigung kann insbesondere durch eine fahrzeugseitige Sensorik oder mittels ohnehin fahrzeugseitig vorhandenen Informationen erkannt werden. Eine Nivellierung des Liegemoduls 8 kann dann beispielsweise mittels einer Regel-/Steuer-Elektrik/Elektronik selbsttätig erfolgen oder eine Verstellung kann entsprechend individueller Bedürfnisse durch einen Fahrer/Beifahrer mit einer geeigneten Bedieneinheit erfolgen.

Eine zusätzliche Verstellmöglichkeit ist durch ein zentral unter der Basisplatte 12 angeordnetes Kugelgelenk 24 möglich wie dies in Fig. 7 schematisch dargestellt ist. Auch damit sind Schwenkeinstellungen des Liegemoduls 8 möglich, wie dies durch das Pfeilkreuz 25 angedeutet ist. Gerade bei einer solchen Ausführungsform sind Abstützungen/Führungen 26 bezüglich des Unterbaus des Liegemoduls 8 zweckmäßig, wie sie in den Eckbereichen in Fig. 5 dargestellt sind. Die Hubelemente können jeweils endseitig mit dem Liegemodul 8 und der Unterlage verbunden sein. Insbesondere in Verbindung mit Führungselementen können die Hubelemente gegebenenfalls auch nur an der Unterlage oder dem Liegemodul 8 befestigt sein und gegenüberliegend für eine Verstellung frei anliegen.

### Bezugszeichenliste

- 1: Nutzfahrzeug
- 2: Fahrerhaus
- 3: Schrägfläche
- 4: Ist-Linie
- 5: Ist-Linie
- 6: Linie
- 7: Linie
- 8: Liegemodul
- 9: Längsrichtung
- 10: Querrichtung
- 11: Schwenkhebel
- 12: Basisplatte
- 13: Basisrahmen
- 14: Ausnehmung
- 15: Latte
- 16: Lattenrost
- 17: Matratze
- 18: Rand
- 19: Luftbalg
- 20: Luftbalg
- 21: Luftbalg
- 22: Luftbalg
- 23: Doppelpfeil
- 24: Kugelgelenk
- 25: Pfeilkreuz
- 26: Abstützung/Führung

## Patentansprüche

1. Fahrzeug, mit einer Schlafliege mit einem Liegemodul (8), das mit einer Haltevorrichtung mit dem Fahrzeugaufbau verbunden ist, wobei die Haltevorrichtung eine Nivelliervorrichtung ausbildet oder aufweist, mittels der das Liegemodul (8) der Schlafliege nivellierbar ist und/oder in eine waagrechte Position bezüglich einer Schräglage des Fahrzeugaufbaus bringbar ist, wobei für eine Nivellierung des Liegemoduls (8) bezüglich einer Schräglage des Fahrzeugaufbaus in einer Fahrzeug-Ruheposition die Haltevorrichtung aus wenigstens einem Kugelgelenk und mehreren höhenverstellbaren Hubelementen (19 bis 22) ausgebildet ist, die derart voneinander in Quer- und in Längsrichtung des Liegemoduls (8) beabstandet und/oder versetzt sind, dass das Liegemodul (8) um eine Längs- und/oder Querachse (9, 10) verschwenkbar ist, und wobei die Hubelemente für eine Höheneinstellung und Nivellierung unabhängig steuerbar sind, wobei die Hubelemente als Aktuatoren jeweils für eine Höheneinstellung und Nivellierung unabhängig steuerbare Bälge (19 bis 22) und/oder Kissen sind.

2. Fahrzeug nach Anspruch 1, **dadurch gekennzeichnet, dass** das Liegemodul (8) eine flache und/oder rechteckige Form aufweist, vorzugsweise aus einem Basisrahmen und/oder eine Basisplatte (12) mit einem Lattenrost (16) und einer Matratze (17) aufgebaut ist, wobei bevorzugt vorgesehen ist, dass je ein Hubelement einer der vier Rechteckseiten zugeordnet ist, vorzugsweise jeweils in einem mittleren Bereich jeder der vier Rechteckseiten angeordnet ist.

3. Fahrzeug nach Anspruch 1 oder 2, **dadurch gekennzeichnet, dass** ein steuerbares Mehrkammer-Luftbalgsystem (19 bis 22) verwendet ist, welches mit Druckluft als Arbeitsmedium aus einem Fahrzeug-Bordnetz oder mit einer separaten, gegebenenfalls im Liegemodul (8) voll- oder teilintegrierten, Kompressoreinheit betrieben ist.

4. Fahrzeug nach Anspruch 1 oder 2, **dadurch gekennzeichnet, dass** ein steuerbares Mehrkammer-Hydraulikbalgsystem verwendet ist, welches mit einem flüssigen Arbeitsmedium, vorzugsweise mit Öl oder Wasser als Arbeitsmedium, betrieben wird und/oder ein Druckausgleichselement und/oder eine, vorzugsweise vollständig oder teilweise in das Liegemodul (8) integrierte, Kompressoreinheit aufweist.

5. Fahrzeug nach einem der vorhergehenden Ansprüche, **dadurch gekennzeichnet, dass** die Hubelemente (19 bis 22) zur Nivellierung bei festgestellter Fahrzeug-Ruheposition und Fahrzeug-Neigung mittels einer Regel- /Steuer-Elektrik/Elektronik selbsttätig betätigbar sind und/oder die Hubelemente von einer Bedienperson, vorzugsweise einem Fahrer oder Beifahrer, mit einer Bedieneinheit individuell steuerbar sind.

6. Fahrzeug nach Anspruch 5, **dadurch gekennzeichnet, dass** die Bedieneinheit zur Aktivierung und/oder Deaktivierung der Regel-/Steuer-Elektrik/Elektronik wenigstens einen Schalter und/oder wenigstens einen Taster und/oder wenigstens ein Fernbedienungselement und/oder eine App für eine Aktivierung/Steuerung mittels einer Steuereinrichtung, vorzugsweise einer mobilen Datenverarbeitungseinrichtung und/oder einem Fahrzeugschlüssel als Steuereinrichtung, aufweist.

7. Fahrzeug nach einem der vorhergehenden Ansprüche, **dadurch gekennzeichnet, dass** das Liegemodul (8) eine Basisplatte (12) und/oder einen Basisrahmen (13) aufweist und das Kugelgelenk (24) zentral unter der Basisplatte (12) und/oder dem Basisrahmen (13) angeordnet und verbunden ist, wobei eine Winkelverstellung des Kugelgelenks (24) durchführbar und eine eingestellte Winkellage fixierbar ist, vorzugsweise mittels einer Fixiereinrichtung, höchst bevorzugt mittels einer Magnetsicherung, fixierbar ist.

8. Fahrzeug nach einem der vorhergehenden Ansprüche, **dadurch gekennzeichnet, dass** das Liegemodul (8) mit wenigstens einer Abstützung und/oder Führung gehalten ist und während einer Verstellung gegen eine mechanische Kraft arbeitet und sowohl in einer Grundstellung auf festen Auflagen als auch in einer nivellierten Einstellung mittels der Kinematik und/oder Verriegelungsbauteilen, insbesondere klapperfrei, lagegesichert ist.

9. Fahrzeug nach einem der vorhergehenden Ansprüche, **dadurch gekennzeichnet, dass** das Liegemodul (8) mittels einer Kinematik (11) klappbar ausgebildet ist, insbesondere für einen Zugang zu einem Stauraum.

10. Fahrzeug nach einem der vorhergehenden Ansprüche, **dadurch gekennzeichnet, dass** das Fahrzeug ein Lastkraftwagen mit einem Fahrerhaus (2) ist und die Schlafliege im Fahrerhaus (2), vorzugsweise quer im Bereich hinter den Sitzen, angeordnet ist.

## Claims

1. Vehicle, having a sleeping bunk with a bunk module (8) which is connected by way of a securing apparatus to the vehicle body, the securing apparatus configuring or having a levelling apparatus, by means of which the bunk module (8) of the sleeping bunk can be levelled and/or can be moved into a horizontal position with regard to an oblique position of the vehicle body, the securing apparatus being configured from at least one ball joint and a plurality of height-adjustable lifting elements (19 to 22) for levelling of the bunk module (8) with regard to an oblique position of the vehicle body in a vehicle rest position, which lifting elements (19 to 22) are spaced apart and/or offset from one another in the transverse direction and in the longitudinal direction of the bunk module (8) in such a way that the bunk module (8) can be pivoted about a longitudinal and/or transverse axis (9, 10), and it being possible for the lifting elements to be controlled independently for a height adjustment and levelling operation, the lifting elements being bellows (19 to 22) and/or cushions which can be controlled independently as actuators in each case for a height adjustment and levelling operation.

2. Vehicle according to Claim 1, **characterized in that** the bunk module (8) has a flat and/or rectangular shape, and is preferably constructed from a base frame and/or a base plate (12) with a slatted frame (16) and a mattress (17), it preferably being provided that in each case one lifting element is assigned to one of the four rectangle sides, and is preferably arranged in each case in a middle region of each of the four rectangle sides.

3. Vehicle according to Claim 1 or 2, **characterized in that** a controllable multiple-chamber air bellows system (19 to 22) is used which is operated by way of compressed air as operating medium from a vehicle on-board system or by way of a separate compressor unit which is possibly integrated fully or partially into the bunk module (8).

4. Vehicle according to Claim 1 or 2, **characterized in that** a controllable multiple-chamber hydraulic bellows system is used which is operated by way of a liquid operating medium, preferably by way of oil or water as operating medium, and/or has a pressure equalization element and/or a compressor unit which is preferably integrated completely or partially into the bunk module (8).

5. Vehicle according to one of the preceding claims, **characterized in that** the lifting elements (19 to 22) can be actuated automatically by means of a regulating/control electric/electronics system for the levelling operation in the case of a determined vehicle rest position and vehicle inclination, and/or the lifting elements can be controlled individually by way of an operating unit by an operating person, preferably a driver or co-driver.

6. Vehicle according to Claim 5, **characterized in that**, in order to activate and/or deactivate the regulating/control electric/electronic system, the operating unit has at least one switch and/or at least one button and/or at least one remote control element and/or an app for an activation/control by means of a control device, preferably a mobile data processing device and/or a vehicle key as control device.

7. Vehicle according to one of the preceding claims, **characterized in that** the bunk module (8) has a base plate (12) and/or a base frame (13), and the ball joint (24) is arranged and connected centrally below the base plate (12) and/or the base frame (13), it being possible for an angular adjustment of the ball joint (24) to be carried out and for a set angular position to be fixed, preferably to be fixed by means of a fixing device, very preferably by means of a magnetic securing means.

8. Vehicle according to one of the preceding claims, **characterized in that** the bunk module (8) is held by way of at least one support and/or guide, and operates counter to a mechanical force during an adjustment, and is secured positionally, in particular without rattling, by means of the kinematic system and/or locking components both in a basic position on fixed supports and in a levelled setting.

9. Vehicle according to one of the preceding claims, **characterized in that** the bunk module (8) is configured such that it can be folded by means of a kinematic system (11), in particular for access to a stowage compartment.

10. Vehicle according to one of the preceding claims, **characterized in that** the vehicle is a lorry with a driver's cab (2), and the sleeping bunk is arranged in the driver's cab (2), preferably transversely in the region behind the seats.

## Revendications

1. Véhicule, comprenant une couchette avec un module de couchage (8), qui est relié à la structure de véhicule par un dispositif de maintien, dans lequel le dispositif de maintien forme ou présente un dispositif d'alignement horizontal, au moyen duquel le module de couchage (8) de la couchette peut être aligné horizontalement et/ou peut être amené dans une position horizontale par rapport à une position inclinée de la structure de véhicule, dans lequel, pour un alignement horizontal du module de couchage (8) par rapport à une position inclinée de la structure de véhicule dans une position de repos du véhicule, le dispositif de maintien est formé d'au moins une rotule et de plusieurs éléments de levage réglables en hauteur (19 à 22), qui sont espacés et/ou décalés l'un par rapport à l'autre en direction transversale et longitudinale du module de couchage (8) de telle manière que le module de couchage (8) puisse pivoter autour d'un axe longitudinal et/ou transversal (9, 10), et dans lequel les éléments de levage peuvent être commandés de façon indépendante pour un réglage en hauteur et un alignement horizontal, dans lequel les éléments de levage en tant qu'actionneurs respectivement pour un réglage en hauteur et un alignement horizontal sont des soufflets (19 à 22) et/ou des coussins pouvant être commandés de façon indépendante.

2. Véhicule selon la revendication 1, **caractérisé en ce que** le module de couchage (8) présente une forme plate et/ou rectangulaire, de préférence est composé d'un cadre de base et/ou d'une plaque de base (12) avec un sommier à lattes (16) et un matelas (17), dans lequel il est de préférence prévu qu'un élément de levage soit chaque fois associé à un des quatre côtés du rectangle, et soit disposé de préférence respectivement dans une région centrale de chacun des quatre côtés du rectangle.

3. Véhicule selon une revendication 1 ou 2, **caractérisé en ce qu'**il utilise un système de soufflets pneumatiques à plusieurs chambres réglable (19 à 22), qui fonctionne avec de l'air comprimé comme fluide de travail provenant d'un réseau de bord du véhicule ou avec une unité de compresseur séparée, éventuellement intégrée entièrement ou partiellement dans le module de couchage (8).

4. Véhicule selon une revendication 1 ou 2, **caractérisé en ce qu'**il utilise un système de soufflets hydrauliques à plusieurs chambres réglable, qui fonctionne avec un fluide de travail liquide, de préférence avec de l'huile ou de l'eau comme fluide de travail, et/ou qui présente un élément d'équilibrage de pression et/ou une unité de compresseur, de préférence intégrée entièrement ou partiellement dans le module de couchage (8).

5. Véhicule selon l'une quelconque des revendications précédentes, **caractérisé en ce que** les éléments de levage (19 à 22) peuvent, après que la position de repos du véhicule et l'inclinaison du véhicule ont été détectées, être actionnés automatiquement pour l'alignement horizontal au moyen d'un système électrique/électronique de régulation/commande et/ou les éléments de levage peuvent être commandés individuellement par un opérateur, de préférence un conducteur ou un passager, au moyen d'une unité de commande.

6. Véhicule selon la revendication 5, **caractérisé en ce que** l'unité de commande présente, pour l'activation et/ou la désactivation du système électrique/électronique de régulation/commande, au moins un interrupteur et/ou au moins un bouton-poussoir et/ou au moins un élément de télécommande et/ou une application pour une activation/commande au moyen d'un dispositif de commande, de préférence un dispositif de traitement de données mobile et/ou une clé de véhicule comme dispositif de commande.

7. Véhicule selon l'une quelconque des revendications précédentes, **caractérisé en ce que** le module de couchage (8) présente une plaque de base (12) et/ou un cadre de base (13) et la rotule (24) est disposée et assemblée au centre sous la plaque de base (12) et/ou le cadre de base (13), dans lequel on peut effectuer un réglage angulaire de la rotule (24) et fixer une position angulaire réglée, de préférence la fixer au moyen d'un dispositif de fixation, de préférence encore au moyen d'une fixation magnétique.

8. Véhicule selon l'une quelconque des revendications précédentes, **caractérisé en ce que** le module de couchage (8) est maintenu avec au moins un support et/ou un guidage et travaille pendant un réglage contre une force mécanique et est bloqué en position, aussi bien dans une position de base sur des appuis fixes que dans un réglage aligné horizontalement, au moyen du mécanisme et/ou de pièces de verrouillage, en particulier sans claquement.

9. Véhicule selon l'une quelconque des revendications précédentes, **caractérisé en ce que** le module de couchage (8) est rabattable au moyen d'un mécanisme (11), en particulier pour un accès à un espace de rangement.

10. Véhicule selon l'une quelconque des revendications précédentes, **caractérisé en ce que** le véhicule est un camion avec une cabine de conduite (2) et la couchette est disposée dans la cabine de conduite (2), de préférence transversalement dans la région située derrière les sièges.
